# EUROPEAN PATENT SPECIFICATION

(11) **EP 1 140 422 B1**
(45) Date of publication and mention of the grant of the patent: **29.12.2004**
(21) Application number: 99956428.9
(22) Date of filing: 08.10.1999
(51) Int. Cl.: B23Q 15/00

(54) **APPARATUS FOR THE POSITIONING OF A TOOL OR A TOOL HOLDER IN A MACHINE DESIGNED FOR PROCESSING A SHEET MATERIAL**
VORRICHTUNG ZUR POSITIONIERUNG EINES WERKZEUGS ODER EINES WERKZEUGHALTERS IN EINER MASCHINE ZUR BEARBEITUNG VON BLATTFÖRMIGEM GUT
DISPOSITIF DE POSITIONNEMENT D'UN OUTIL OU D'UN PORTE-OUTIL DANS UNE MACHINE CONCUE POUR TRAITER UN MATERIAU EN FEUILLE

(30) Priority: 09.10.1998 SE 9803459
(43) Date of publication of application: 10.10.2001
(73) Proprietor: Emsize AB, 745 37 Enköping (SE)
(72) Inventor: PETTERSON, Niklas, S-745 39 Enköping (SE)
(74) Representative: Svanfeldt, Hans-Ake
(86) International application number: PCT/SE1999/001781
(87) International publication number: WO 2000/021713

(56) References cited:
- FR-A1- 2 280 484
- FR-A1- 2 626 642
- US-A- 3 886 833
- US-A- 4 994 008
- US-A- 5 259 255

## Description

### TECHNICAL FIELD

This invention relates to apparatuses and arrangements for the controlled positioning of tools or holder for tools, preferably in a machine for shaping or processing sheet material. More specifically, the invention relates to an apparatus having means for the controlled and accurate positioning of holders for tools, the tools being designed for engagement with the material in the feed direction or feed directions relative to a process machine. The invention also relates to process machines having a control- and positioning apparatus in accordance with the invention, and specifically a machine for shaping and processing a planar packing material such as corrugated board, card board and similar material into a blank for wrappings, or other articles.

In the disclosure, there is suggested a structurally plain and cost effective arrangement for positioning tools operative for cutting, milling, perforation, folding or similar processing, as well as for position sensing and detection. The positioning apparatus may be formed for shifting the tools to operative engagement with the material at least in a direction that coincides with the material feed direction relative to the apparatus. In one embodiment for the packing industry there is suggested an apparatus designed for the controlled positioning of tools in operative engagement in a direction transversally to the material feed direction relative to the apparatus. The positioning apparatus of the invention may also be operated as the tools are in operative engagement with the material, for processing the material in any desired direction or angular relative to the general feed direction, and thus also in curved engagement at different radius.

The invention may be applied for processing different materials. The invention is disclosed herein as an embodiment designed for process operations such as cutting, folding, punching, etc., of sheet materials like corrugated board or card board. From the disclosure, however, the man of skill in the art will understand how to dimension and adapt the inventive arrangements with tools which are suitable for processing wood, fiber board, metal plate, plastics, etc. Alternative processes may include water milling, laser milling, drilling, slot cutting or other appropriate process operation and engagement. Accordingly, the thickness of the processed material is not a limitation to the invention.

In the invention there is suggested a positioning arrangement by which tools are controlled and shifted to alternate positions and in alternate directions of operative engagement. A characterizing feature of the invention is that a set of tools, the number of which may be chosen from the subject technical requirements and desired process aims, are coincidentally but individually controlled to be positioned through the operation of one single positioning means. In the set of tools, the individual tool may alternatively be controlled for coordinated and simultaneous shift movement or engaging process movement, or alternatively be controlled for individual movement relative to the material and relative to the other tools. This way, the invention makes possible a shifting of tools concurrently with an operative process engagement in accordance with a preset work scheme, by utilizing a driven motion in a single positioning arrangement.

The positioning arrangement of the invention is driven in a continuous or intermittent motion that is transferred to the tools, or holder for the tools, for individually shifting the tool position or for operative engagement with the material. The tool or tool holder comprises means, controlled by the work scheme for. gripping or connecting to the driven motion of the positioning arrangement, such that the tools are carried along in the driven motion.

The driven motion of the positioning arrangement may be performed in alternative ways. The disclosed packing industry embodiment suggests a toothed belt, running on cog wheels, to which the tool holders are controlled for alternative engagement with the upper or lower part of the belt to be carried along in either of two directions. Instead of the toothed belt, other flexible and endless elements such as V-belts, chains or lines which are driven to run on wheels or rollers may alternatively be utilized.

The positioning arrangement may be continuously or intermittently driven in a motion substantially transverse to the material feed direction during the work process. A single drive means is required to provide the continuous or intermittent transverse motion, so that the invention makes possible a structurally plain drive for the tool shifting and/or processing motion, through the separately controlled connection with the positioning arrangement. Through appropriately dimensioned gears, transmission and couplings, the drive means may also be used for providing the material feed motion relative to the arrangement.

In the disclosure, there is shown an embodiment designed for processing a sheet formed packing material. The process machine is stationary, while the material is fed in relative movement to the machine. Said relative movement has a main feed direction transversely to the machine, and substantially transverse to the two movement directions of the positioning arrangement. The feed motion may be a reciprocating motion in the main feed direction.

Within the technical field from where the invention has originated, there is a problem in that machines for producing packing blanks of different shapes and dimensions often are structurally complicated and space consuming. Accordingly, they tend to be expensive both in aspects of construction, installation, maintenance and operation.

A typical example of a machine for said purpose is disclosed in EP 0 247 300. This machine has several stations, some of them including tools for folding and cutting both lengthwise and transversely. This machine produces packing blanks from a web of corrugated card board, supplied from a supply reel. The machine has a large number of moving parts, such as axles and rollers for feeding the web, chains, drive motors, etc. All parts are supported in a space consuming frame that requires a correspondingly spacious accommodation.

In said machine, the stations for folding and cutting comprise positioning means for shifting the tools position in adaptation to desired dimensions of the packing blank. A common drawback of said positioning means is that shifting of the tools may only be accomplished in symmetry with the longitudinal center of the machine.

A container-blank forming machine is previously known from US 4,994,008. This machine includes a flat-stock support-bed on which the material is advanced for processing by selectively activatable and shiftable cutting heads. The cutting heads are laterally displaceable through V-belts, running over guide sheaves and attached by their ends to the cutting heads. The cutting heads are fixedly connected to the V-belts, and positioning of the cutting heads is accomplished by running the V-belts in opposite directions. This machine has longitudinal and transverse cutting capacities, however, the structure is not very compact and each cutting head is associated with a separate belt.

An apparatus for positioning rotary cutting blades for slitting a web material is previously known from US 5,259,255. Tool carrying slides are laterally displaceable by engaging, through a double acting piston and a counter-support, either part or stretch of a belt that is driven in one direction. The apparatus includes a lower slide and an upper slide, each controlled by a respective belt. The lower and upper slides are displaced in synchronization to be correspondingly positioned on either side of the web material, engaging the web material from both sides by the tools of the upper and lower slides. Disclosed is an apparatus with longitudinal cutting capacity - transverse processing requiring, however, an additional apparatus to be operated in succession therewith.

In the subject invention there is provided a solution to above said problem. The inventive positioning arrangement makes possible a controlled shifting of a desired number of individual tools, either separately or in mutual synchronization, for positioning the tools or for operative engagement with the material. In a single process station, multiple work operations may thus be concurrently or sequentially performed in multiple tool shifting movements, individually or in coordination. The movements may be concurrently executed in alternate directions by separately connecting individual tools to a single transverse motion, whereby the space required for the machine is significantly reduced. Also, as a result from the shorter total length of the machine made possible by the invention, the process time for preparing a packing blank may be significantly reduced. A significant simplicity of construction and maintenance is achieved when the shifting of each tool, and possibly also the tool's controlled movement under engagement with the material, is accomplished by a single transverse motion, or a motion transversally to the moving or feeding direction of the material.

This way, good process economy is obtainable also on a smaller production scale, and more specifically also in single unit production. The versatility of a machine comprising the inventive positioning arrangement may advantageously be exploited by the end user, i.e. for product-guided processing of packing blanks in the packing line of a producer company. Hereby, the producer gains storage space and access to individually designed packing blanks, and need not tie-up capital for storing packing blanks.

### OBJECT OF INVENTION

One object of the invention is to provide an arrangement having means for accurate and versatile, controlled positioning of tools or tool holders in a machine adapted for processing a sheet material. Processes of cutting, slot milling, folding, perforating, etc., may be performed with accuracy in various lateral positions and in accordance with a preset work scheme when the material is forwarded relative to the arrangement.

Another object of the invention is to provide a machine, incorporating the inventive positioning arrangement for processing packing material.

These objects are met in a machine formed in accordance with claim 1. Preferred embodiments of the invention are defined in the subclaims.

### DRAWINGS

The invention is further disclosed with reference to the attached drawings. In the drawings
Fig. 1 shows the operative elements of the invention incorporated in a machine for processing a sheet material, in a perspective view from the feeding end;
Fig. 2 shows the machine of fig. 1 from the discharge end, and
Fig. 3 is a sectional view, showing the inventive arrangement of figs. 1 and 2.

### DETAILED DESCRIPTION

The following detailed description of the invention refers to an application for the packing industry. However, the positioning arrangement of the invention may also be utilized within other technical fields for processing and finishing various sheet materials, by installing the adequate tools.

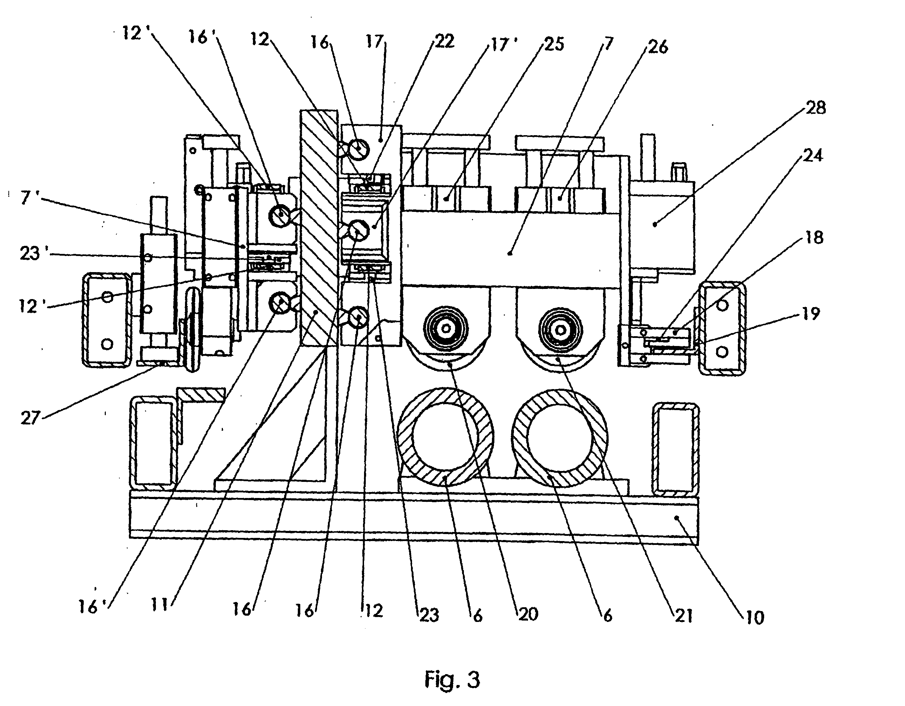

With reference to fig. 3, there is disclosed a machine 1 for processing corrugated board, card board or similar sheet material in order to produce packing blanks or other articles. In the disclosed application, the arrangement carries tools for cutting and folding in order to produce slots and folding marks in the work piece. Naturally, in applications for processing synthetic material, wood or metal plate, etc., the tools would be chosen in consideration of the properties of the subject material, and consequently the tools may comprise various kinds of cutting edges.

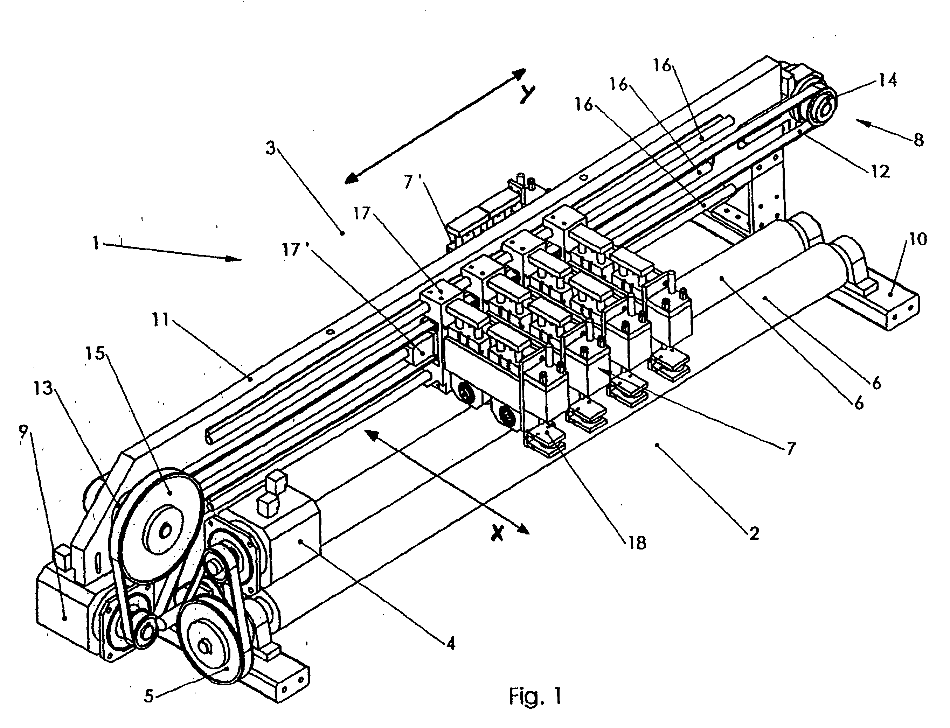

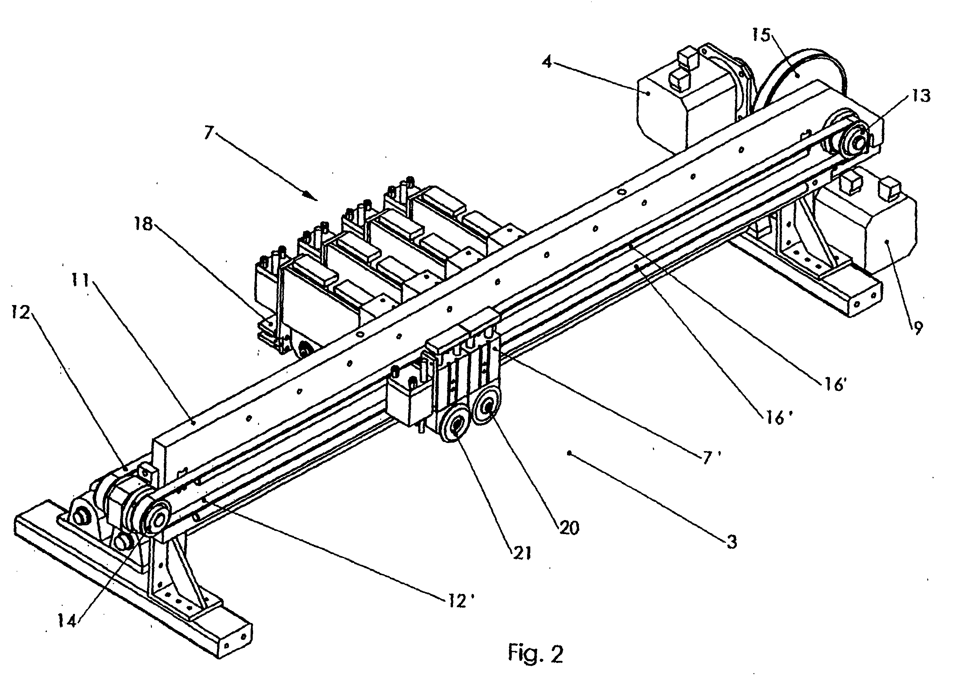

The machine 1 comprises means for feeding the material relative to the machine. The material is moved in a forward main direction X, alternatively in a reciprocating motion, to be fed through the machine 1 in a process cycle from a feeding end 2 to a discharge end 3 (see fig. 1 and 2, respectively). The feed means may comprise a reversible motor 4, which rotates a pair of rolls or rollers 6 via a transmission 5.

A number of tool holders 7 are supported to be laterally movable above the feed rollers 6. The tool holders 7 carries tools which are operative for processing the material in the main direction X, whereby the feed rollers 6 also may serve as counter rollers for the tools. For this purpose, the rollers 6 have a surface coating which is adapted to cooperate with the tool. The tool holders are shifted laterally by a driven positioning means 8. Said positioning means is designed to carry individual tool holders 7 to a predetermined lateral position relative to the material and relative to other tool holders 7. The positioning means 8 is driven by a motor 9. All elements in the inventive positioning arrangement are supported by a frame 10, which is only partially shown in the drawings.

Said positioning means 8, the motor 9 and tool holders 7 are supported in the frame 10, in the shown embodiment on a beam 11 which reaches transversely to the material's travel direction in the machine 1.

The positioning means 8 comprises an endless line 12, driven by the motor 9.The line 12 runs over a drive wheel 13 and a running wheel 14 and reaches across the arrangement at a length which admits the tool holders to be positioned and to operate over the working width of the machine. A gear reduction 15 may be necessary for reducing the motor speed to a suitable rotational speed of the endless driven line 12. As will be seen from the drawings of figs. 1 and 2, driven lines 12 and 12' may be supported at opposite sides of the beam 11, arranged to serve tool holders 7 and 7' positioned at the feeding and discharge ends, respectively.

The tool holders 7 are supported to be laterally displaceable transversely to the main feed direction X of the material. For this purpose, guide means 16 are arranged on the side of the beam 11. In the shown embodiment, the guides 16 are shaped as rails having a circular section. However, the guides may also be of other shapes, and may e.g. be grooves, formed on the beam 11 or corresponding element. The number and shapes of the guides 16 will be adapted to the specific application and load, and may thus be one or several, and are shown in the described embodiment to be two and three, respectively.

The tool holders 7 comprise slide means 17 by which the tool holders are slidably supported on the guides 16. An aperture, corresponding to the sectional profile of the guides 16 is formed through each slide means 17. A friction reducing slide- or roll bearing means is preferably mounted in the aperture. In the shown embodiment, said slide means 17 are designed for preventing relative motion between the guide means and the tool holder in radial directions. For this purpose, the slide means 17 at least partially encloses the guide 16. Alternatively, the guide 16 is mounted to be circumferentially accommodated in the slide means 17. In the shown embodiment, though, the guides 16 are mounted on a longitudinal bar, having a trapetzoidal section and arranged to support the guides in spaced relation to the surface of beam 11. In order to increase lateral rigidity of the tool holders and to prevent a jam lock, one of the slide means 17' is preferably laterally displaced. In this case, a recess (not shown) is matingly formed on the opposite side of the tool holder for receiving the laterally displaced slide means 17' of an adjacent tool holder in a close position.

In the opposite end of the tool holder 7, a stopper means 18 is arranged to engage a guide means 19 for arresting the tool holder in a set position. Alternatively, the stopper 18 is formed to slidably engage the guide 19 in order to stabilize the lateral movement of the tool holder under displacement or in operative engagement with the material.

One or several tools are supported by the tool holders 7 to be operative in the main feed direction X. In the shown embodiment, said tools are a fold wheel 20 and a cut wheel 21, respectively, arranged in tandem in the main feed direction X. In other applications, the tool holders may comprise tools for cutting, sawing, milling, pressing, punching, riveting, nibbling, etc. The tools may also be displaced in a direction Y. The tools 20,21 are arranged in the tool holders to be vertically adjustable, and in a lowered position to operatively engage the processed material or in raised position to be rested above the surface of the material.

Preferably, the tool holders 7 and tools 20,21 are pneumatically or hydraulically controlled by using air or liquid, supplied through valves and circuits only diagramatically illustrated at 28, or electrically controlled by electric magnets and switches (not shown).

Reference being made to fig. 3, wherein clamp means such as plungers 22,23 are shown to be pneumatically or hydraulically operated for engagement with the upper or lower part of the .endless driven line 12, as appropriate. When activated, the clamp means 22,23 presses the line 12 to be clamped by a counter support formed in the tool holder such that the tool holder is carried along by the moving line. the clamp means 22,23 are individually activated and controlled by a preset work scheme, such that each tool holder 7 may be individually controlled for operative or positioning displacement transversally to the material main feed direction X, separate from or in coordination with the displacement of the other tool holders. An accurate synchronization and positioning of tool holders 7 relative to a start position is achievable by the inventive arrangement, when the drive means 9 is an electric motor which is frequency controlled, or a hydraulic motor.

In the shown embodiment the driven line 12 is a toothed belt, and the wheels 13,14 are cog wheels. The driven line may be of other construction, and may thus be an endless chain, V-belt, or a line having a circular section, as long as a skid free transfer of the motor power is secured.

A pneumatically or hydraulically operated clamp means, such as a plunger 24 provides a stopping engagement with the guide 19 for arresting the tool holder in the set position.

The clamp means-22,23 and 24 may alternatively be electrically operated, and may e.g. be solenoids.

The tools 20,21 are vertically adjustable relative to the processed material. To this purpose, the tools are supported in the lower ends of two double-acting pistons 25 and 26, which are disposed in parallel to be activated by air, liquid or electricity.

The clamp means 22,23 for guiding and positioning the tool holders, as well as the clamp means 24 and the pistons 25,26 for lowering or rising the tools, are controlled in their operation through a preset work scheme for processing and finishing the work material. Preferably, the work scheme is stored in a digital memory unit and executed in a processor. The signal output from the processor controls appropriate valves, pressure regulators and the motors 4 and 9 to perform the process steps and tool displacements stored in the memory unit, in an automatic work cycle which is substantially free from any interruptions. It will be understood, that the tools are raised above the surface of the material in displacement mode for positioning the tool holders 7, and that the positioning movement is coordinated with the material's feed movement relative to the machine, i.e. in coordination with the operation of motor 4.

The inventive positioning arrangement is shown herein in connection with a machine for processing sheet formed card board or corrugated board which is formed into packing blanks for boxes of varying sizes and construction.

Reference being made to figs. 2 and 3, wherein the discharge end of the machine has a tool holder 7' supported to be laterally displaceable transversally to the main feed direction X, substantially as the tool holders 7 on the feed end of the machine. Vertically adjustable cutting tools and folding tools are mounted in the tool holder 7' for cutting slots or making fold marks in the material, transversally to the motion in the direction X and transversally also to such slots and fold marks which are made by the tools of the tool holders 7. An endless and driven line 12', running on wheels 13,14 carries the tool holder 7' in alternating engagement with the upper and lower part of the line, respectively, for operation in both motion directions. The line 12' is driven synchronously to the line 12 by the common motor 9. The synchronous drive and motion of the lines 12,12' in process operations transversally to the motion in the direction X may selectively be used for coincident positioning or control of one or several tool holders 7,7', either separately or in mutual synchronization in accordance with the preset work scheme. The material feed motion relative to the arrangement may be stalled during process steps operating transversally to the feed direction, in which case a holding means 27 is operable to hold the material in such transverse processes.

In the disclosed application, the machine comprises a number of individually controlled tool holders 7. The outermost tool holders may include detecting means (not shown) for detecting the longitudinal margins of the material. The outer tool holders may further comprise tools, e.g. cutting tools for adjusting the material width to the dimensions of the finished packing blank or article, or e.g. feed rollers (not shown) for holding the processed material in contact with the feed rollers 6. A program for controlling the positioning and process operation may preferably contain information for the positioning of all tool holders to a start position which is adapted to the material's input position in the machine as registered by the detecting means of the outermost tool holders.

In a modified embodiment, the positioning arrangement and the relative motion between the processed material and the machine/tools is generated by a common drive means, and distributed via a transmission which is controlled from the stored-work scheme. It will be understood, that with an appropriate choice of tools and control parameters, the material feed and tool control may be synchronized for angular processing of the material under feed, e.g. in order to perform diagonal fold lines and slitting, or for curve cutting. This modified embodiment may be preferred in connection with laser cutting or water milling.

The machine of the disclosed application example comprises tools for highly automated processing in two, mutual transverse directions. The control program thus contains information for cutting and folding the material in the longitudinal and transverse directions, respectively. While avoiding manual adjustment, packing blanks or other articles of varying dimensions may thus selectively be produced from a single basic material, e.g. a so called fanfold or a roller supply.

The technician in the field of packing industry may further modify the machine for other production, e.g. the production of storage articles such as cassettes having drawers for storage, exhibition material and display material, etc.

The main feature of the invention is here illustrated in connection with an embodiment, wherein a continuous or intermittent motion in a direction Y, transversally to the main feed direction X of a transported material, is utilized by individual tool holders for separate or synchronous lateral displacement by being selectively connectable to the transverse motion. Said transverse motion is performed by an endless line, which is driven to run on wheels. Another feature of the invention is, that the positioning arrangement provides controlled positioning of one or more individual tool holders transversely to the material's main feed direction, separately or in mutual synchronization, concurrently with the controlled positioning of one or more individual tool holders in the opposite direction, separately or in mutual synchronization, wherein a single motion generating means is continuously or intermittently driven to be selectively engaged by individual tool holders.

The invention has been illustrated in connection with a machine for processing a sheet material to packing blanks. However, it will be understood that the positioning arrangement of the invention may be modified for other implementations where multiple process steps are performed in the surface of a material having more thickness, or performed through a sheet material of lesser thickness. From the disclosure, it will also be understood that the operation of the inventive positioning arrangement is independent form the properties of the material to be processed when choosing the appropriate tools to be mounted in the tool holders.

## Claims

1. A machine for processing a sheet material into packing blanks, the sheet material being advanced through the machine in a'first direction (X) from a feed end towards a discharge end, the machine comprising
- a frame carrying a set of feed rollers (6), driven for reciprocally feeding the sheet material in the first direction;
- a first set of tools (20;21) carried in tool holders (7) and supported by the frame for processing the sheet material in said first direction (X);
- a second set of tools (20;21) carried in tool holders (7') and supported by the frame for processing the sheet material in a second direction (Y), transversely to the first direction;
- the first and second sets of tools being displaceable on guides (16;16') supported by the frame, transversely to said first direction (X);
- said first and second sets of tools being connectable to an endless belt (12;12') driven for rotation, **characterized by**
- connecting means (22;23) individually controllable for connecting and disconnecting the tools and tool holders of the first and second sets separately and selectively to an upper or lower part, respectively, of the rotating belt for transverse displacements and for processing the sheet material in both said first and second directions, synchronously with the feed of the sheet material.

2. The machine of claim 1, wherein a transverse beam (11) is carried by the frame, one side of the beam facing the feed end and an opposite side facing the discharge end, the first set of tools supported on one side of the beam and the second set of tools supported on the opposite side of the beam.

3. The machine of claim 2, wherein each first and second sets of tools and tool holders are associated with a separate endless belt (12;12'), respectively.

4. The machine of claim 3, wherein a singular motor drives the two endless belts in synchronized rotation.

5. The machine of claim 1, wherein tools for cutting and folding are arranged in tandem and selectively controllable for engagement and disengagement, respectively, with the sheet material.

6. The machine of claim 1, wherein the tools of said first set are supported above the feed rollers (6), the feed rollers providing counter support for the tools engaging the sheet material.

7. The machine of claim 1, wherein a separate clamp means (24) is controllable for arresting the tool holders (7) in a lateral position relative to the sheet material.

## Patentansprüche

1. Vorrichtung zur Ver- oder Bearbeitung eines Blattmaterials oder blattförmigen Guts oder Flächengebildes zu Verpackungsrohlingen oder Verpackungsvorformen, wobei das Blattmaterial in einer ersten Richtung (X) von einem Zuführungsende in Richtung eines Austrag- oder Entnahmeendes durch die Vorrichtung befördert wird, wobei die Vorrichtung folgendes umfasst:
- einen Rahmen, der einen Satz von Zuführungsrollen (6) trägt, die angetrieben werden zum umgekehrten oder wechselseitigen Zuführen des Blattmaterials in die erste Richtung;
- einen ersten Satz von Werkzeugen (20;21), die von Werkzeughaltern (7) getragen werden und die durch den Rahmen zur Verarbeitung des Blattmaterials in der ersten Richtung (X) gehalten werden;
- einen zweiten Satz von Werkzeugen (20;21), die in Werkzeughaltern (7') getragen werden und die durch den Rahmen zur Verarbeitung des Blattmaterials in eine zweite Richtung (Y), die transversal oder quer zu der ersten Richtung verläuft, gehalten werden;
- den ersten und zweiten Satz von Werkzeugen, die verschiebbar sind auf Führungen (16;16'), die getragen werden durch den Rahmen, transversal oder quer zu der ersten Richtung (X);
- wobei der erste und zweite Satz von Werkzeugen mit einem Endlosband oder Endlosgurt (12;12'), das oder der zur Rotation angetrieben wird, verbindbar ist, **gekennzeichnet durch**
- Verbindungsmittel (22;23), die unabhängig oder einzeln steuerbar sind zum getrennten und selektiven oder ausgewählten Verbinden und Trennen oder Entkuppeln der Werkzeuge und Werkzeughalter des ersten und zweiten Satzes mit einem oberen bzw. unteren Teil des rotierenden oder umlaufenden Bands oder Gurts für eine Querverschiebung und zum Verarbeiten des Blattmaterials sowohl in der ersten als auch der zweiten Richtung, synchron oder gleichlaufend mit der Zuführung des Blattmaterials.

2. Die Vorrichtung nach Anspruch 1, wobei ein Querarm oder Querbinder (11) von dem Rahmen getragen wird, wobei eine Seite des Arms oder Binders dem Zuführungsende zugewandt ist und eine entgegengesetzte oder gegenüberliegende Seite dem Ausgabeende zugewandt ist, der erste Satz von Werkzeugen auf einer Seite des Arms gehalten wird, und der zweite Satz von Werkzeugen auf der gegenüberliegenden Seite des Arms gehalten wird.

3. Die Vorrichtung nach Anspruch 2, wobei jeder erste und zweite Satz von Werkzeugen und Werkzeughaltem jeweils mit einem getrennten oder eigenen Endlosband oder Endlosgurt (12;12') zugeordnet ist.

4. Die Vorrichtung nach Anspruch 3, wobei ein einzelner Motor die zwei Enlosbänder oder Endlosgurte in synchronisierter oder gleichlaufender Rotation antreibt.

5. Die Vorrichtung nach Anspruch 1, wobei Werkzeuge zum Schneiden und Falten hintereinander oder als Tandem angeordnet sind und selektiv steuerbar sind zum in Eingriff bringen bzw. außer Eingriff bringen mit dem Blattmaterial.

6. Die Vorrichtung nach Anspruch 1, wobei die Werkzeuge des ersten Satzes über oder oberhalb der Zuführungsrollen gehalten werden, wobei die Zuführungsrollen eine Gegenhattekraft bereitstellen für die Werkzeuge, die in das Blattmaterial eingreifen.

7. Die Vorrichtung nach Anspruch 1, wobei ein getrenntes Klemm- oder Einspannmittel (24) steuerbar ist zum Feststellen der Werkzeughalter (7) in einer seitlichen Position relativ zu dem Blattmaterial.

## Revendications

1. Machine pour traiter un matériau sous forme de feuille dans des ébauches d'embattage ("packing blanks"), le matériau sous forme de feuille avançant à travers la machine dans une première direction (X) à partir d'une extrémité d'alimentation vers une extrémité de décharge, la machine comprenant :
- un bâti portant un jeu de rouleaux d'alimentation (6) actionnés pour alimenter réciproquement le matériau sous forme de feuille dans la première direction;
- un premier jeu d'outils (20,21) porté par des supports d'outils (7) et soutenu par le bâti pour traiter le matériau sous forme de feuille dans ladite première direction (X);
- un second jeu d'outils (20,21) porté par des supports d'outils (7) et soutenu par le bâti pour traiter le matériau sous forme de feuille dans une seconde direction (Y), dans le sens transversal à la première direction
- les premier et second jeux d'outils étant déplaçables sur des glissières (16,16') dans le sens transversal à ladite première direction (X);
- lesdits premier et second jeux d'outils étant reliables à une courroie sans fin (12,12') actionnée pour effectuer une rotation, **caractérisée par**
- des moyens de liaison (22,23) manoeuvrables individuellement pour relier et séparer les outils et les supports d'outils des premier et second jeux de manière distincte et sélective par rapport à une partie supérieure ou inférieure, respectivement, de la courroie en rotation pour des déplacements transversaux et pour traiter le matériau sous forme de feuille à la fois dans lesdites première et seconde directions, de manière synchrone avec l'alimentation du matériau sous forme de feuille.

2. Machine selon la revendication 1 **caractérisé en ce qu'**une poutre transversale (11 ) est portée par le bâti, un côté de la poutre faisant face à l'extrémité d'alimentation et le côté opposé faisant face à l'extrémité de décharge, le premier jeu d'outils étant porté sur un côté de la poutre et le second jeu d'outils étant porté sur le côté opposé de la poutre.

3. Machine selon la revendication 2 **caractérisé en ce que** chacun des premier et second jeux d'outils et supports d'outils est associé respectivement à une courroie distincte sans fin (12,12').

4. Machine selon la revendication 3 **caractérisé en ce qu'**un moteur singulier entraîne les deux courroies sans fin dans une rotation synchronisée.

5. Machine selon la revendication 1 **caractérisé en ce que** les outils pour la coupe et le pliage sont disposés en tandem et sont manoeuvrables de manière sélective pour respectivement, s'engager et se désengager du matériau sous forme de feuille.

6. Machine selon la revendication 1 **caractérisé en ce que** les outils dudit premier jeu sont tenus au-dessus des rouleaux d'alimentation (6), les rouleaux d'alimentation fournissant un contre-support aux outils s'engageant dans le matériau sous forme de feuille.

7. Machine selon la revendication 1 **caractérisé en ce que** des moyens de blocage distincts (24) sont manoeuvrabtes pour arrêter les supports d'outils (7) dans une position latérale par rapport au matériau en forme de feuille.
